# EUROPEAN PATENT SPECIFICATION

(11) **EP 1 234 451 B1**
(45) Date of publication and mention of the grant of the patent: **07.05.2003**
(21) Application number: 99974142.4
(22) Date of filing: 22.10.1999
(51) Int. Cl.: H04N 7/16

(54) **METHOD AND APPARATUS FOR MANAGING MULTIPLE APPLICATIONS IN LARGE SCALE NETWORKS**
VERFAHREN UND GERÄT ZUR VERWALTUNG VON MEHREREN ANWENDUNGSPROGRAMMEN IN GROSSFLÄCHIGEN NETZWERKEN
PROCEDE ET APPAREIL PERMETTANT DE GERER DE MULTIPLES APPLICATIONS DANS DES RESEAUX A GRANDE ECHELLE

(43) Date of publication of application: 28.08.2002
(73) Proprietor: General Instrument Corporation, Horsham, Pennsylvania 19044 (US)
(72) Inventor: BOOTH, Robert, Charles, Jamison, PA 18929 (US); TAVOLETTI, Donald, Warrington, PA 18976 (US); BATES, Thomas, F., IV., Richboro, PA 18954 (US); DEL SORDO, Chris, Souderton, PA 18964 (US); ERINOFF, Mark, A., Souderton, PA 18964 (US); DIFIGLIA, Michael, Jenkintown, Pennsylvania 19046 (US)
(74) Representative: Hoeger, Stellrecht & Partner
(86) International application number: US9924745
(87) International publication number: WO01031920

(56) References cited:
- EP-A- 0 399 200
- US-A- 5 654 746
- US-A- 5 734 589
- US-A- 5 951 639

## Description

### BACKGROUND OF THE INVENTION

The present invention relates to a method and apparatus that allows a digital network to manage and utilize multiple applications in consumer terminals (e.g., set-top boxes). The applications can be provided in different service tiers on a fee basis. The invention provides a "Multiple Application Management (MAM)" feature by defining mechanisms, messages and data structures.

The communication of data via digital networks, including broadband communication networks such as cable and satellite television networks, has become increasingly popular. Such networks allow consumers and others to receive high quality video and audio programming services. Moreover, commonly an application such as an Electronic Program Guide (EPG) which lists the available programming services has been made available.

With the increasing integration of computer networks such as the Internet, telephony networks, and broadband distribution networks, many opportunities arise for providing new types of applications, such as electronic program guides, Internet browsers, video on demand, audio on demand, mail services (e.g., text e-mail, voice mail, audio mail, and/or video mail), telephony services, stock prices, weather data, travel information, games, gambling, banking, shopping, voting, and others.

However, currently there is a lack of capability within broadband digital terminal networks to efficiently support more than one software application. As mentioned, typically this single software application is an electronic program guide. Thus, existing digital terminals cannot support additional software applications that can enhance the user's experience and increase revenue for the service provider. EP-A-0 399 200 discloses a method for remotely modifying the functionality of a cable television converter by downloading firmware to the converter. Control data including program authorization codes are provided to the converter on a first channel to instruct the terminal to receive the firmware package on a second channel.

Accordingly, it would be desirable to provide the capability for a digital terminal to download more than one application, and to manage the resources used by different applications. The system should manage the authorization and enabling of the different applications in different digital terminals in a terminal population. The system should inform the user as to what applications are authorized and available for use.

Generally, the system should:
1. allow a digital terminal to support multiple applications;
2. inform the terminal and end user, e.g., via an on-screen menu, which applications are authorized in a given terminal, and allow the user to select (e.g., "launch") an application;
3. indicate to a digital terminal if an application has special features (e.g., such as built-in e-mail), and authorize these features in the digital terminal;
4. indicate that a specific programming source or channel should be tuned to before an application is launched;
5. effectively manage volatile and non-volatile memory (terminal resources) used by an application;
6. authorize an application on a terminal via a Billing System (e.g., at a headend), and provide the different applications on a fee basis, including the provision of different service tiers;
7. provide conditional downloading of applications while avoiding unnecessary expense in terms of security processing;
8. provide backward compatibility with existing terminals in the network (e.g., operator's plant) to allow the terminals to continue to operate without any detrimental side effects; and
9. provide updated and test versions of applications to specific terminals, and manage the enabling thereof at the terminals.

The present invention provides a system having the above and other advantages.

### SUMMARY OF THE INVENTION

The present invention relates to a method and apparatus for allowing a digital network to manage and utilize multiple applications in consumer terminals.

Significant features of the present invention include:
1. Use of a digital message (such as a Virtual Object message encapsulated within an MPEG message), transmitted across any network (such as a broadband cable network), to deliver the following to a digital consumer terminal:
1-A. Software application specific information (such as a Virtual Application Table, or VAT), including, but not limited to:
   i) Application authorization requirements used to authorize the download of an application to a digital terminal;
   ii) Index or reference to an authorized application (such as on a broadband network multiplex or on the Internet).
   iii) Application authorization requirements used to authorize the execution of (or enabling of) an application in a digital terminal;
   iv) Application feature authorization requirements used to authorize such features on a digital terminal (e.g., built-in e-mail, video-on-demand, or web browsing capabilities associated with an application such as an electronic program guide);
   v) Application-specific commands and operations to be executed prior to the download and/or launch of an application, such as tuning to a specific channel (or channels, if multiple tuners are available);
   vi) Application menu data used by a digital terminal for creating a menu of authorized applications available for selection by an end user, such as text data describing one or more authorized applications (i.e., the names of the applications); and
1-B. Initialization and configuration information allowing:
   i) A digital terminal to be configured for multiple applications;
   ii) A digital terminal to be allocated a specified amount of volatile memory for the download of multiple applications; and
   iii) A digital consumer terminal to receive the software.
2. The invention also provides dynamic creation of user application selection menu (s) containing a list of applications which are currently authorized for a digital terminal.
3. The invention also provides removal of application data in non-volatile or volatile memory based upon the current authorization state of application versions.
4. The invention also provides authorization of the following via a billing system interface:
   A. Access to broadcast and/or interactive data servers allowing for access to data objects or data services, such as software applications and associated application features.

In accordance with the present invention, a method for managing multiple applications in a digital network having a headend that broadcasts programming services to a terminal population via a communication channel, includes the step of: communicating configuration data from the headend to the terminals in the terminal population via the communication channel to configure the terminals to receive application data and control data. The application data is provided for a plurality of applications, and defines an identifier, a version, and a required authorization state for each of the applications.

The control data defines respective authorization states (or tiers) for the terminals. The application data and control data are communicated from the headend to the terminals via the communication channel to enable the terminals to download and access the versions of the applications for which the required authorization state thereof corresponds to the terminal's authorization state.

The terminal automatically downloads any new version of an application for which it is authorized to replace the old version. Similarly, if the terminal's authorization state is upgraded, e.g., upon payment of additional fees by the subscriber, additional applications are downloaded. If the terminal's authorization state is downgraded, applications already stored but no longer authorized are deleted.

A corresponding method for managing multiple applications at a terminal is disclosed.

Corresponding apparatuses are also disclosed.

### BRIEF DESCRIPTION OF THE DRAWINGS

FIG. 1 illustrates an overview of a digital network for providing multiple application management in accordance with the present invention.
FIG. 2 illustrates a digital terminal with a multiple application management capability in accordance with the present invention.
FIG. 3 illustrates the creation of a local virtual application table (VAT) for a terminal based on the terminal's authorized tiers in accordance with the present invention.
FIG. 4 illustrates an example dynamically-created menu of the available applications at a terminal in accordance with the present invention.
FIG. 5 illustrates a method for providing multiple application management in a digital network in accordance with the present invention

### DETAILED DESCRIPTION OF THE INVENTION

The present invention relates to a method and apparatus for allowing a digital network to manage and utilize multiple applications in consumer terminals.

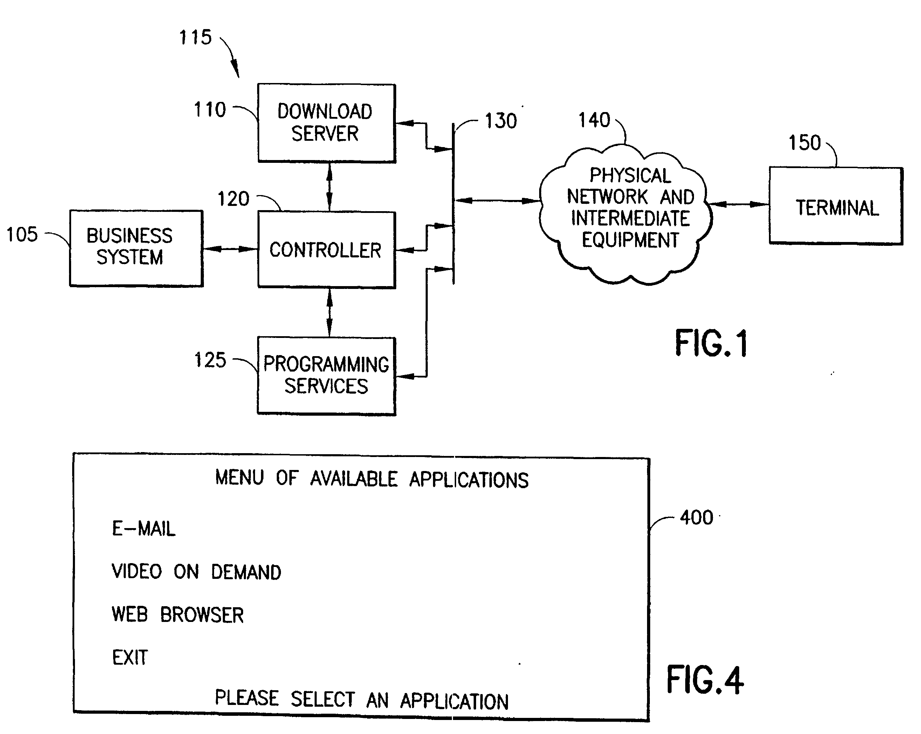

FIG. 1 illustrates an overview of a digital network for providing multiple application management in accordance with the present invention. A business system 105, which may be located at, or otherwise be in communication with, the headend 115 of a network such as a cable or satellite television network, manages the billing and authorization of applications for each specific terminal in a network.

Users of the network can make arrangements to receive authorizations for the applications using conventional techniques, e.g., by phoning an operator and authorizing a credit card payment, or by use of an upstream communication path on the network, if available. For example, a user may request an authorization for an e-mail application, assuming the terminal has the capability to access a network such as the Internet. Moreover, the user may have the option of requesting a basic or an enhanced e-mail capability for different fees.

Thus, a virtual application can be viewed as a "service" from the perspective of the Business System 105.

Moreover, the network operator has the capability to authorize specific terminals to receive an application without a user request, e.g., as a promotion, or as part of a package deal when other programming services are ordered, or some other goal is reached, such as the user purchasing a certain dollar value of video-on-demand programs.

The business system 105 can be implemented with a computer and known record-keeping and billing procedures.

The business system 105 communicates with a controller 120, which communicates with a download server 110. The download server 110 transmits the application data via an interface 130, and physical network and intermediate equipment 140 to a terminal 150. Note that the example terminal 150 is assumed to be part of a large terminal population. The application data may be broadcast to all terminals, but preferably can only be recovered by the terminals based on control data from the controller 120.

Alternatively, or in addition, control data can be provided to the terminal 150 by other means, such as locally using a smart card, or at the time of installation or manufacture of the terminal. However, the provision of control data via a controller that is under the direct control of a headend 115 is believed to provide the greatest flexibility since updated control data can be transmitted immediately to the terminal 150. Moreover, known decoder addressing and conditional access techniques can be used to deliver specific control data to specific terminals or groups of terminals. For example, the control data can be encrypted under a key that has been assigned to the specific terminal.

The controller 120 thus configures and authorizes the terminals under the control of the Business System 105.

Programming services, e.g., conventional television programs, or other video, audio or other data, is provided by a programming services function 125.

The application and control data can be encapsulated in transport packets, for example, such as MPEG-2 packets, using known techniques. The application and control data can be carried in-band, with the programming services, or out-of-band, apart from the programming services. Also, the application data can be sent via any reliable transport mechanism, for example via TCP/IP.

The physical network and intermediate equipment 140 may include cable and/or optical fiber, as well as required switches, amplifiers and other conventional components.

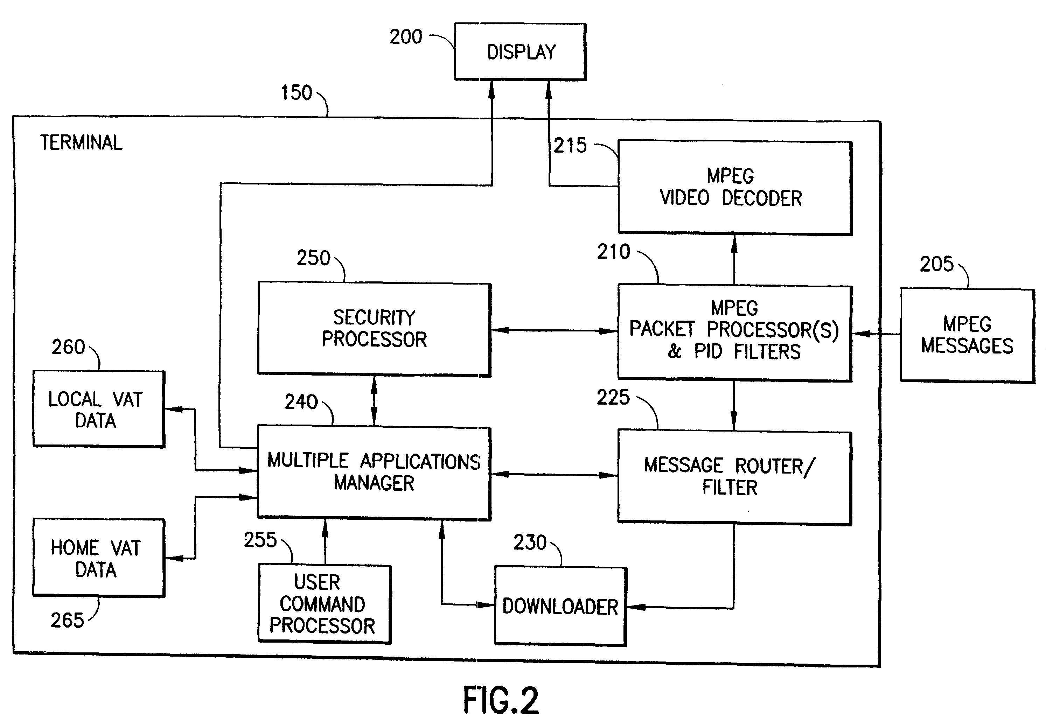

FIG. 2 illustrates a digital terminal with multiple application management capability in accordance with the present invention. Like-numbered elements correspond to one another in the figures. The terminal 150 receives MPEG messages (packets), such as an example packet 205, from a communication channel. Use of MPEG packets is discussed herein only as an example. Any digital data transport protocol may be used.

An MPEG packet processor and packet identifier (PID) filter 210 processes the packet 205 to recover the control data from the controller 120 of FIG. 1, which is provided to a security processor 250 and a Multiple Application Manager (MAM) 240. The MAM 240 and other terminal functions can be implemented using any known software, firmware and/or hardware techniques.

The control data, including authorization state data, can be stored at a memory associated with the terminal 150. The packet processor 210 also recovers the application data and forwards it to a downloader 230. The downloader 230 has an associated memory for storing the downloaded application data, including the applications themselves, such as code objects. "Downloading" refers to recovering and storing. The downloader 230 also receives a *"Tune Download Channel"* message that commands it to download particular applications, and/or particular versions of the same application from a specific channel. The channel may be identified by a PID in a known manner.

The packet processor 210 may also recover conventional programming services for decoding, e.g., at an MPEG video decoder 215, and display on a display 200.

The MAM 240 can output data to the display 200 for launching the applications, such as e-mail or web browser, stock ticker, or the like, separately or together with data from a programming service.

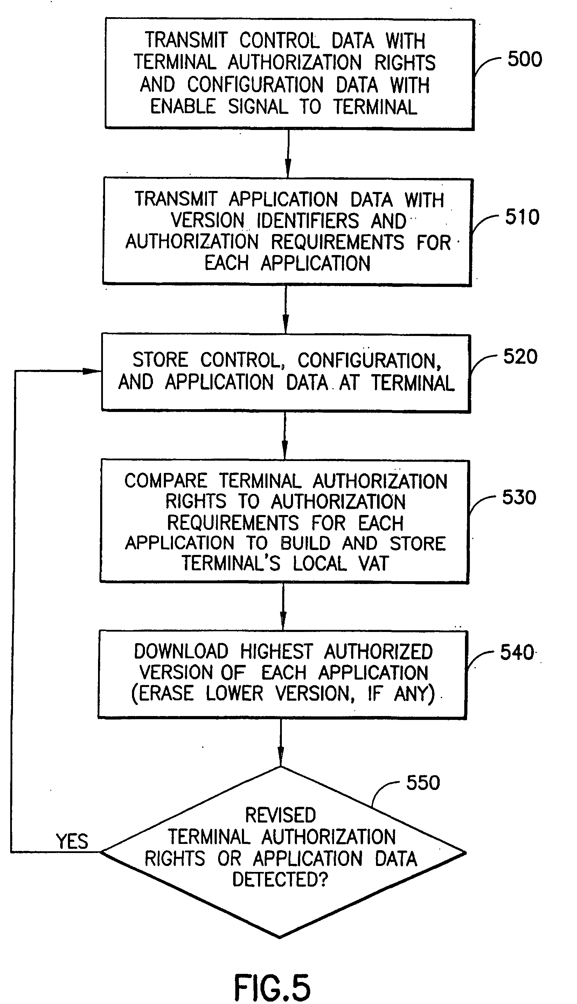

The MAM 240 can also output data to the display 200 for providing an on-screen menu of available applications (see FIG. 4). A user may interact with the menu via a user command processor 255, e.g., which receives input signals from a keyboard, infra-red remote control or the like.

The security processor 250, a Local Virtual Application Table (VAT) memory 260, a Home VAT data memory 265, and a message router/filter 225 communicate with the MAM 240. Home VAT data refers to common VAT table that is downloaded to all terminals, while local VAT data refers to data that is used by each terminal, and is derived as a subset of the home VAT data based on the terminal's authorization state. Essentially, the local VAT data designates the latest version of each application that a terminal is authorized to download and access. The local VAT data can therefore be different for different terminals.

The message filter/router 225 sends data such as control data and authorization data, including the home VAT data and Entitlement Management Messages (EMMs) to the MAM 240, while application code (software) is sent to the downloader 230.

With the present invention, controls data is used to authorize terminals to acquire multiple applications, and to enable the applications for use within the terminal.

The MAM 240 can be implemented by using new messages in the terminal 150, as well as some existing messages that are modified and/or interpreted differently.

The MAM 240 receives and processes these messages, and uses the security processor 250 to determine which of the multiple applications is authorized for acquisition and enabling at the terminal.

Virtual applications are applications that can be identified, downloaded, and enabled under the control of the MAM 240. The virtual applications can be transported to the terminal 150 in download messages. However, the applications could downloaded via other means, such as via HTTP.

Virtual Application configuration messages and Virtual Object messages, which contain Virtual Application Tables, are examples of messages which can be used in a digital network, such as the one depicted in FIG. 1, for managing multiple applications, and for configuring a terminal for multiple application management.

The data structures and information contained in the messages also provide authorization requirements needed by a terminal for downloading an application, and for enabling and executing an application or any special characteristics that may be associated with the application.

In addition, via other messages sent by the controller, the terminal receives authorization rights for an application or for any special characteristics associated with an application.

For example, EMMs sent from the controller can authorize a terminal for an application or its characteristics. This is done in the same manner that a terminal is authorized for a video service.

Using the authorization requirements and the authorization rights, the MAM 240 uses the security processor module 250 within the terminal 150 to determine the authorization state, or other special characteristics, of any given version of an application.

In one possible implementation, the MAM 240 maintains the required authorization state of a virtual application in non-volatile memory within the terminal 150.

The authorization state of an application determines if an application can be downloaded by the downloader 230 at the terminal 150, i.e., whether an application (or a specific version of the application) is preserved in, purged from, or deleted from, the downloader's memory.

Also, the authorization state of an application may determine whether or not specified resources can be pre-allocated for the application in the terminal, such as the amount of volatile and non-volatile memory.

The messages from the controller 120 also provide the terminals with additional information pertaining to the applications, such as an index or reference to an application code object on a network.

The messages also provide information regarding the specific channel or channels which the terminal 150 may tune to for acquiring video, audio, and/or data content associated with the applications.

The VAT data may be stored in non-volatile flash memory, battery-backed SRAM, a hard drive if available, or any other non-volatile memory available in the terminal. Alternatively, the VAT data may be stored in volatile memory, in which case it is simply re-acquired from the network each time the terminal is powered on.

Moreover, the VAT data may be sent to the terminal 150 from the controller 120 on a cyclic basis, e.g., every twenty seconds. However, this time frame can be adjusted based upon specific network configurations and demands.

A virtual application can be configured and enabled as follows. The terminal 150 may optionally receive a configuration message ("Virtual Application Config") that informs it that it is configured in a MAM state. When so configured, the terminal can receive a "virtual object message", which provides the home VAT to the terminal. The terminal 150 derives it's own local VAT 260 based on the received home VAT data 265 and the received control data, which sets the terminal's authorized tier(s) (e.g., authorization state).

The MAM 240 can maintain the information from the Virtual Application Config. and the Virtual Object messages in non-volatile memory. The information would thus be preserved through any warm resets of the terminal. A warm reset causes volatile memory, such as DRAM to be cleared/reset. This may be caused by unplugging the terminal from its power supply, for example.

The MAM 240 communicates with the security processor 250 to check the required authorization tiers for applications, which are specified in the received VAT data. The authorization state information is typically maintained in non-volatile memory.

The downloader 230 maintains a directory of the versions of the code objects that are already stored.

If the *Tune Download Channel* message for a virtual application is received by the downloader 230, the downloader 230 checks its object directory to determine if the version of the code object specified in the message is already present. If the code object (e.g., application) is not already present, the downloader 230 will check with the MAM 240 to determine if the version of the application is authorized for downloading.

If the MAM 240 informs the downloader 230 that a specific virtual application version is authorized, the downloader 230 tunes to a download channel for the application and attempts to acquire the specified application version. After acquiring a virtual application, the downloader 230 de-tunes from the download channel.

The applications can be assigned a default "disabled" status when first recovered. In this case, the MAM 240 also informs the downloader 230 whether to enable the applications or to leave them disabled. Alternatively, the applications can be automatically enabled when they are recovered by the downloader 230.

In one possible implementation, only one application is enabled at any given time. This may be the case when current applications do not gracefully share resources, such as memory, queues, and so forth, so the MAM 240 has to disable an application to reacquire these resources for use by another application. Preferably, the terminal has the capability of enabling more than one application at a time. To accomplish this, a second set of states, or modes of operation, can be added for applications that are enabled. This set would consist of foreground and background modes. In this type of implementation, only one application will ever be the "foreground" application at any time.

The MAM can also dynamically prepare an on-screen menu based upon the authorized virtual applications, as discussed further in connection with FIG. 4.

Moreover, the MAM 240 can tune, if specified, to a channel (or channels) that are associated with a virtual application prior to, concurrent with, or after launching the virtual application. For example, the virtual application may comprise a banner of sports scores, in which case the MAM 240 can cause a specific sports-oriented programming service (e.g., ESPN(tm)) to be tuned and displayed. Conversely, the application of sports scores may be automatically launched when the programming service is tuned.

The MAM 240 can re-check the required authorizations of all virtual applications if the terminal 150 receives a new VAT, receives a change in its existing VAT, or receives new authorization rights, e.g., via an EMM. The VAT data and control messages can be transmitted to the terminals on an on-going basis, at regular intervals, or only at specific times.

Optionally, each VAT may have revision data, such as a sequence number, that changes whenever application versions are added or removed. The MAM 240 is alerted by the revision data to re-check its authorizations and modify its local VAT, if necessary. Or, the MAM 240 may simply recheck its authorizations periodically or based on some other criteria.

Efficient management of a terminal's memory resources is also an important part of the present invention. Accordingly, the MAM 240 can provide control signals to the downloader 230, based upon the existence of and/or the authorization state of a virtual application, which determine whether or not the downloader 230 should remove or maintain the code objects related to the virtual application(s) that are stored in the downloader's memory. Generally, lower versions of an application (authorized or unauthorized) that are being replaced should be deleted when the new highest authorized version is downloaded.

Advantageously, it is possible to upgrade only a subset of the terminals in a terminal population by providing a decoder conditional, *"configured_for_MAM",* that determines whether each terminal will acquire a VAT and become MAM enabled, and tune to a download channel to acquire a virtual application. Thus, terminals that have not been upgraded with MAM-capable firmware platform code can continue to operate without any detrimental side effects caused by the innovations involved with MAM. On the other hand, *"configured_for_MAM"* can be set to allow progressive upgrading of a terminal population.

The *"Virtual Application Config"* message (e.g., "configuration data") is used to configure or deconfigure a terminal for MAM, and to provide MAM configuration settings to a terminal. Information derived from the *Virtual Application Config message* is typically stored by the terminal in non-volatile memory (e.g., via the MAM 240) to preserve it through (warm) resets of the terminal.

The *Virtual Application Config* message can include the following significant fields in an example syntax:
*"config_for_multi_apps",* when set to "yes", configures a terminal for MAM capability. The terminal is then considered to be in a *configured_for_MAM* state, and is able to receive other messages which have the *configured_for_MAM* decoder condition in the message preamble. If this field is cleared to "no", the terminal will no longer be *configured_for_MAM,* nor enabled for MAM;
*"home_VAT_ID"* identifies a VAT which is used as a terminal's default VAT ("*home*_*VAT*");
*"default_application_ID"* identifies an application which will be the default virtual application for a terminal. This ID correlates to the *object_application_ID* of a virtual application in the *home_VAT;* and
*"volatile_memory_config"* specifies the number of bytes of volatile memory that the terminal allocates and make available for the download of virtual applications other than the default virtual application.

Furthermore, the present invention can use a message type known as a "Virtual Object message", e.g., to deliver a VAT to a terminal. Moreover, this message can be carried in a network stream (an MPEG standard that denotes any data delivered on the network PID within a multiplex), and may be sent either broadcast-addressed (to all terminals in the network), multicast-addressed (to a group of terminals) or singlecast-addressed (to an individual terminal).

The controller 120 in FIG. 1 prefixes the virtual object message with a *configured_for_MAM* decoder condition in the message preamble. As a result, only terminals which are *configured_for_MAM* will process this message. This ensures that terminals which are not running a MAM capable firmware platform code will fail the decoder condition test, and will not acquire a VAT.

A terminal is considered to be in a MAM enabled state if it is *configured_for_MAM,* and has completely acquired the *home_VAT.*

Information derived from the Virtual Object message, including the VAT, is stored typically by the terminal in non-volatile memory (e.g., at the MAM 240), to preserve it through (warm) resets of the terminal.

The Virtual Object message can include the following significant fields:
"*table_subtype*" specifies that this Virtual Object message contains a VAT;
"VAT_ID" specifies an identifier for the VAT contained in this message. This ID may be the same as the *home_VAT_ID* from the *Virtual Application Config* message;
*"sequence_number"* specifies a version number for the VAT. If the *sequence_number* for the VAT included in this message is different from the *sequence_number* associated with the VAT, and the same *VAT_ID* is already present in the terminal, this implies that the VAT has changed;
*"number_of_va_records"* specifies how many VAT records are present in the VAT included in this message; and
*"va_record"* is an array of VAT records constituting the VAT. Each record identifies a virtual application. One of the records may identify the virtual application whose *default_application_ID* was given in the *Virtual Application Config* message.

Each record of the VAT can include the following significant fields:
*"object_application_ID"* contains a numeric identifier for the virtual application. The identifier should be unique among all va_records within a VAT;
*"VCT_source_ID"* is a list of identifiers of programming "sources" which are associated with the virtual application. Programming sources include any video, audio, or data "sources" that can be identified by a "source_ID", which is typically used to map a source name (e.g., ABC, HBO) to a virtual channel. The terminal may use these values to obtain a virtual channel to be tuned to before enabling the virtual application.
*"VCT_application_ID"* is a list of identifiers of "services" associated with the virtual application. The values and usage are the same as described for *VCT_source_ID* above;
*"object_version"* is a list of version numbers for each of the versions which can exist of a virtual application. The terminal will download the highest authorized version;
*"virtual_application_tier"* is a list of required authorization tiers for the virtual application, one per version. All versions of an application may have the same or different tiers. This specifies the authorization requirements for the versions of the virtual application; and
*"virtual_name"* is a multi-lingual text string of printable ASCII characters. The name can be used for on-screen displays at the terminal.

The *Tune Download Channel* Message is a sub-command of the Download Control message. A field *"tune_download_function_field" can* specify whether the message applies to a *"virtual_application"* or to a standard, non-MAM application.

The *Tune Download Channel* message for all virtual applications should contain the *configured_for_MAM* decoder condition in the message preamble. As a result, only terminals which are *configured_for_MAM* will process this message. This ensures that terminals which are not running a MAM-capable firmware platform code will fail the decoder condition test, and will not acquire a virtual application.

If a virtual application is specified in the *Tune Download Channel* message, the virtual application is identified by the *obj_application_ID* field in the message. This virtual application then correlates to the one identified by the *object_application_ID* field in one of the records of the VAT (i.e., the *home_VAT)* maintained by the MAM 240 of FIG. 2. Moreover, the *obj_application_ID, tune_object_name* and *tune_object_version* in the *Tune Download Channel* message should correlate with the *application_ID, object_name* and *object_version,* respectively, in the Download message for the virtual application.

A *Tune Download Channel* message can be provided for a system-wide default virtual application. The *configured_for_MAM* decoder condition is not used for this default application. As a result, all terminals will always be able to acquire the system-wide default application.

The invention may also replace the use of Download Control messages. Since the MAM 240 has the information (via the VAT) about which applications should be enabled, disabled, purged, etc., the Downloader 230 can no longer directly act on the receipt of the Download Control sub-command message.

As a result, if MAM is enabled, the "enable", "disable", "deletes and "purge" functions specified in a Download Control message, for virtual applications, are ignored by the Downloader 230.

Also, if MAM is enabled, the "enable" function specified in a Download Control message for a virtual application causes the Downloader 230 to interrogate the MAM 240 to see if a particular application should indeed be enabled. The MAM responds back with instructions to enable or disable the virtual application.

The invention may also use a *"Virtual Channel Config Message".* If MAM is enabled, the terminal will disregard the *turnon_VC_defined, turnon_VC, turnoff_VC_defined* and turnoff_VC fields specified by this message if the default virtual application has a defined *VCT_source_ID.* "VC" indicates a virtual channel. In this case, the terminal will tune to the channel associated with the *VCT_source_ID* given for the default virtual application.

The MAM feature requires the presence of versions of software, in the controller 120, and in a terminal 150, which are capable of executing the MAM functionality. The controller 120 should have a version of software which can create and send the new and modified messages to the terminals. The controller should be capable of providing one-way refreshes of specific configuration messages to terminals.

The controller should also provide multiple billing system authorization support for multiple applications.

All current terminals executing out of ROM code cannot be *configured_for_MAM,* because reserved entries and fields are used for implementing the MAM functionality.

Likewise, all terminals currently executing non-MAM capable software from flash memory should be downloaded with a version of software which is MAM capable that can acquire, understand and process the new and modified messages related to MAM functionality.

The invention implements a MAM while minimizing required changes to existing applications by providing a default virtual application, such as an electronic program guide (EPG), on a system-wide basis.

The *Tune Download Channel* message for the system-wide default virtual application is the only such message in the system that specifies the object as a virtual application, and does not require a *configured_for_MAM* decoder condition in the preamble of the message. Each Tune Download Channel message specifies an object to download. For standard applications, the message includes an application name and version as well as a channel where the application object is being transmitted. When a terminal receives this message, it tunes to the specified channel to acquire the object. For virtual applications, this message also includes the application_ID for the object in addition to the information included for a standard application.

As a result, any terminal that is not running a version of software that is MAM capable, will acquire and enable the system-wide default application without recognizing it as a virtual application.

A terminal which is running a MAM capable version of firmware platform code can also acquire the system-wide default application. However, after acquiring the application, it will be treated as a virtual application to be managed by the MAM 240.

A MAM enabled terminal's default virtual application is downloaded into non-volatile memory at the terminal and also uses non-volatile memory for its settings so that the default is preserved even while another virtual application is enabled.

When MAM is enabled, the default virtual application, if present in the terminal, is typically enabled after any warm reset of the terminal, or when the terminal transitions from a "Terminal On" to a "Terminal Off" state.

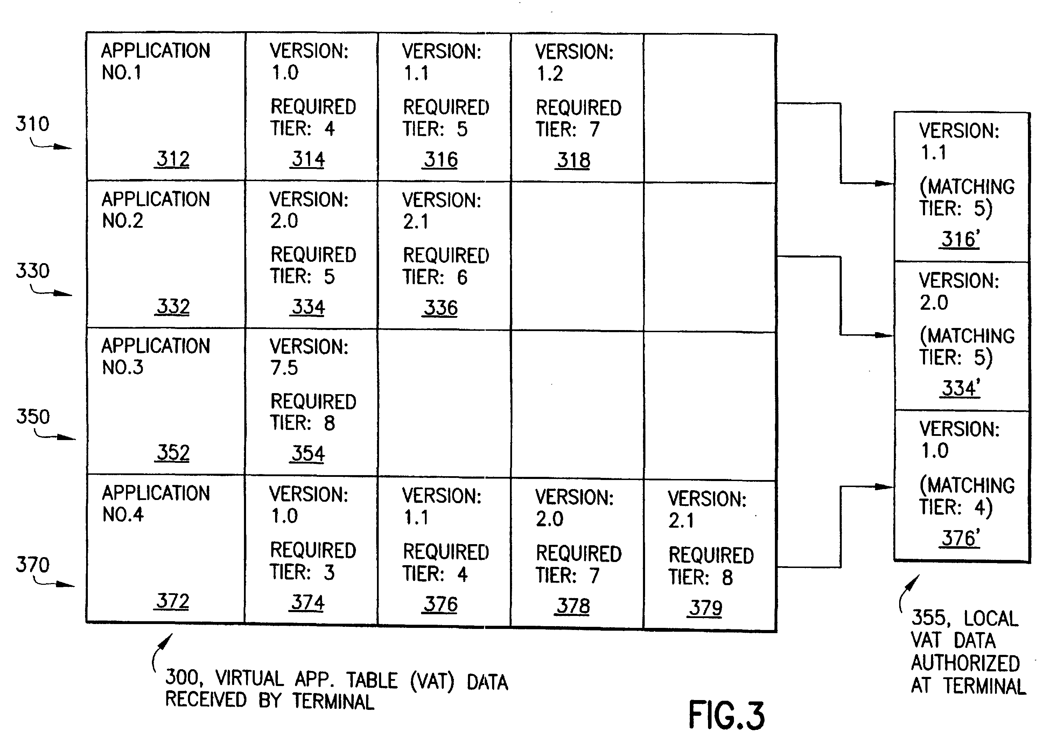

FIG. 3 illustrates the creation of a local VAT for a terminal based on the terminal's authorized tiers in accordance with the present invention.

VAT data that is received by each MAM configured terminal in the network, shown generally at 300, includes a number of rows 310, 330, 350 and 370 of records (*va_records*). Records 312, 332, 352 and 372 contain the identifications (*object_application_ID*) of the first, second, third and fourth applications (i.e., Applications No. 1, No. 2, No. 3, and No. 4, respectively).

Records 314, 316 and 318 contain the version identifier (*object_version*) and required tier (*virtual_application_tier*) for a first application. For example, record 314 has a version "1.0" and a required tier of "4", record 316 has a version "1.1" and a required tier of "5", and record 318 has a version "1.2" and a required tier of "7".

As an example, Application No 1. might be an e-mail capability, where version 1.0 is a basic version, version 1.1 is an enhanced version, and version 1.2 is a test version. Therefore, the invention allows a network operator to control which terminals can access which version of Application No. 1. Those who pay a small fee can access version 1.0, those who pay a larger fee can access version 1.1, and others can access version 1.2, e.g., to provide feedback to the network operator as to whether the version 1.2 works properly or provides desirable features.

For Application No. 2, record 334 has a version "2.0" and a required tier of "5", and record 336 has a version "2.1" and a required tier of "6".

For Application No. 3, record 354 has a version "7.5" and a required tier of "8".

For Application No. 4, record 374 has a version "1.0" and a required tier of "3", record 376 has a version "1.1" and a required tier of "4", record 378 has a version "2.0" and a required tier of "7", and record 379 has a version "2.1" and a required tier of "8".

Versions and tiers are always numeric values. The virtual_application_name is a text string that is associated with all versions of a virtual application and is displayed on the dynamically built menu if one of the versions is authorized in the terminal.

The local VAT data that is authorized at the terminal, shown at 355, is assembled from the received VAT records 300 according to the tier (*virtual_application_tier*) with which the particular terminal is authorized. In the present example, it is assumed that the terminal's authorized rights include tiers "4" and "5". The local VAT data 355 and its tiers denote an authorization state of the terminal.

In this case, the matching tier requirements in the VAT records 300 are in records 316, 334 and 376. Accordingly, the terminal's local VAT 355 includes these records, e.g., stored in the VAT memory 260 of FIG. 2, as records 316', 334' and 376'. Note that when a terminal is authorized to receive two or more versions of the same application (e.g., records 314 and 316), it is generally desirable to select the most recent version (e.g., record 316). Generally, the required authorization state of an application is said to "correspond" to the authorization state of a terminal when the terminal's security processor has received a matching tier via an EMM.

If there is no matching tier for the terminal, e.g., as with Application No. 3, the terminal is not authorized to receive that application, and it is not downloaded.

It is possible to provide a requzred tier and/or authorized tier that allows a terminal to receive the highest version of all available applications.

Note that the VAT data 300 shown is only an example, and various numbers of applications, versions and tiers may be present in the VAT data. Additionally, the local VAT 355 may include all, some or none of the applications in the received home_VAT 300.

FIG. 4 illustrates an example dynamically-created menu of the available applications at a terminal in accordance with the present invention. The menu 400 presents the available authorized applications to the user, e.g., on a television screen. Note that the menu items correspond to the terminal's local VAT 355.

Each application may have a user-friendly textual data (*virtual_name*) associated with it. The messages provided to the terminal provide this textual data that describes the application. This data can be used on the display menu 400 of the terminal.

For example, referring to the example of FIG. 3, Application Nos. 1, 2 and 4 may have the textual data "E-mail", "Video-on-Demand, and "Web Browser", respectively.

Optionally, an additional textual string denotes the version of the application, or the corresponding service tier that the user has purchased. For example, for marketing purposes the versions may be denotes by bronze, silver or gold or the like.

Using the text associated with applications, the MAM 240 of FIG. 2 can dynamically construct a menu of authorized applications.

A user of a terminal can activate this menu and launch (e.g., start) one or more of the available applications by conventional interface techniques, e.g., using a key on a remote control. A particular key may be reserved on the remote control as a "MAM menu button".

Upon receiving VAT data from the controller 120, the MAM may build a menu consisting of a list of names of the authorized applications. This can be accomplished using known software techniques, for example. The menu may also include an "Exit" item to exit the menu. The menu may be implemented as a full or partial screen overlay with the audio muted. In addition, the front panel LEDs may be cleared while the menu is displayed.

A user can activate the display of the menu by pressing the "MAM menu button" on the remote control, and use the "up" or "down" keys on the remote control or on the front panel to scroll through the menu. A user can select an application for launch by pressing the "select" button on the remote control or the front panel of the terminal.

When an application is selected from the menu, the MAM 240 may inform the downloader 230 to enable the application, and the application is started (e.g., launched). The terminal may tune to a specified channel before enabling the application.

If the user selection is not authorized, or is not present in the VAT or in the downloaded objects directory, the MAM 240 will try to re-create the menu and re-display it. After several failed attempts to launch a specific virtual application, the terminal will resort to some type of graceful recovery action.

The user can choose to not select any virtual application on the menu, as a result of which the MAM will re-enable the previously enabled (i.e. - prior to the menu being displayed) virtual application, or resort to a graceful recovery action that may enable the terminal's default virtual application.

FIG. 5 illustrates a method for providing multiple application management in a digital network in accordance with the present invention. A simplified overview of the method of the present invention is shown.

As shown at block 500, control data including terminal authorization rights, and MAM configuration data with an enable signal are sent to each terminal, or selected terminals, in a network. At block 510, application data (i.e., VAT data) with the version identifiers and authorization requirements (e.g., required tiers) for each application are transmitted to the terminals.

At block 520, the corresponding authorization rights and configuration data are stored at the terminals. As discussed, each terminal can have its own authorization state, which may be subsequently replaced or supplemented. At block 530, the terminal compares it authorization state to the authorization requirements for each version of the applications in the home VAT to build and store its local VAT. At block 540, the highest versions of the applications whose required authorization state corresponds to the terminal's authorization state (i.e., of the versions in the local VAT) are downloaded. Lower versions (authorized or unauthorized) of the applications that are being replaced, if any, are erased at the terminal.

At block 550, the terminal continues to monitor the received control data and VAT data to determine if this data has been changed. If so, blocks 520, 530 and 540 are repeated. A change in the terminal's authorization state and/or the VAT data may or may not result in a new home or local VAT and downloading of new applications.

Accordingly, it can be seen that the present invention provides a method and apparatus for allowing a digital network to manage and utilize multiple applications in consumer terminals. Different terminals are authorized individually to download and access one or more of a number of available applications according to the authorization requirements of the application/version combination, and the authorized state of the terminal. Each terminal builds its own "local" VAT that identifies the application/versions for which it is authorized. The invention allows network operators to provide the different applications on a fee basis. Moreover, a customized on-screen menu for each terminal can be dynamically generated based on the terminal's local VAT data.

Although the invention has been described in connection with various specific embodiments, those skilled in the art will appreciate that numerous adaptations and modifications may be made thereto without departing from the spirit and scope of the invention as set forth in the claims.

For example, while various syntax elements have been proposed herein, note that they are examples only, and any syntax may be used.

Moreover, while the invention was discussed in connection with a cable or satellite television broadband communication networks, it will be appreciated that other networks such as Digital Subscriber Loops (DSLs), local area networks (LANs), metropolitan area networks (MANs), wide area networks (WANs), internets, intranets, and the Internet, or combinations thereof, may be used.

## Claims

1. A method for managing multiple applications in a digital network having a headend that broadcasts programming services to a terminal population via a communication channel, comprising the steps of:
communicating configuration data from the headend to terminals in the terminal population via the communication channel to configure the terminals to receive application data and control data; wherein:
said application data is provided for a plurality of applications, and defines an identifier, a version, and a required authorization state for each of the applications; and
said control data defines respective authorization states for the terminals; and
communicating said application data and said control data from the headend to the terminals via the communication channel to enable the terminals to download and access the versions of the applications for which the required authorization state thereof corresponds to the terminal's authorization state.

2. The method of claim 1, wherein:
the required authorization state for each terminal corresponds to one of a plurality of available service level tiers offered by the headend.

3. The method of claim 2, wherein:
the available service level tiers are offered by the headend upon payment of corresponding fees by users of the terminals.

4. The method of one of claims 1 to 3, wherein:
the control data is communicated from the headend to the terminals by addressing individual ones of the terminals.

5. The method of one of claims 1 to 3, wherein:
the control data is communicated from the headend to the terminals by addressing a group of the terminals.

6. The method of one of claims 1 to 5, wherein:
said control data defines a global authorized tier for enabling at least one of the terminals to access all of the applications.

7. The method of one of claims 1 to 6, comprising the further step of:
providing a billing system for billing specific ones of the terminals according to their authorization state.

8. The method of one of claims 1 to 7, wherein the applications include at least one of:
electronic program guide, Internet browser, video-on-demand, audio-on-demand, mail service, telephony service, stock prices, weather data, travel information, games, gambling, banking, shopping, and voting.

9. The method of one of claims 1 to 8, wherein
the application data is communicated via the communication channel in transport packets in a separate band from a band in which the programming services are broadcast.

10. The method of one of claims 1 to 9, comprising the further step of:
generating an on-screen menu at the terminals using the application data thereof according to the versions of the applications the terminals are authorized to access.

11. The method of one of claims 1 to 10, wherein:
when at least two versions of one of the applications have required authorization states that correspond to the authorization states of one of the terminals, the highest one of the versions is downloaded and accessed by the one of the terminals.

12. The method of one of claims 1 to 11, wherein:
the configuration data identifies a default application for the terminals.

13. The method of one of claims 1 to 12, wherein:
the configuration data provides information to the terminals for downloading the application data from the communication channel.

14. , The method of one of claims 1 to 13, wherein:
the digital network is a broadband television communication network.

15. The method of one of claims 1 to 14, comprising the further step of:
specifying a particular programming service that is to be tuned by the terminals when a corresponding application is launched thereat.

16. The method of one of claims 1 to 15, comprising the further step of:
storing the control and configuration data at the terminals for subsequent use in downloading and accessing the versions of the applications for which the required authorization state thereof corresponds to the terminal's authorization state.

17. The method of one of claims 1 to 16, wherein:
the application data includes revision data that allows the terminals to determine when revised application data is being communicated thereto; and
the terminals are responsive to the revision data for determining whether the versions of the applications for which the terminals are authorized to access has changed.

18. The method of one of claims 1 to 17, wherein:
when the versions of the applications for which the terminals are authorized to access has changed, the terminals delete data stored thereat corresponding to a replaced version of the authorized application, and store data thereat corresponding to a new version of the authorized application.

19. The method of one of claims 1 to 18, wherein:
the control data causes the terminals to download the versions of the applications for which the terminals are authorized to access, while rejecting the versions of the applications for which the terminals are not authorized to access.

20. The method of one of claims 1 to 19, wherein:
the configuration data causes the terminals to allocate an amount of memory thereat for storing the versions of the applications for which the terminals are authorized to access.

21. The method of one of claims 1 to 20, wherein:
said identifier, version, and required authorization state for each of the applications are provided to the terminals in a common virtual application table; and
each terminal builds its own local virtual application table from the common virtual application table in accordance with the respective authorization state to define the version(s) of the application(s) for which the required authorization state corresponds to the terminal's authorization state.

22. The method of one of claims 1 to 21, wherein:
if the authorization state of one of the terminals is downgraded, at least one application already stored thereat but no longer authorized is deleted.

23. A method for managing multiple applications in a terminal of a digital network, said digital network having a headend that broadcasts programming services to a terminal population, including said terminal, via a communication channel, comprising the steps of:
receiving configuration data from the headend at the terminal in the terminal population via the communication channel to configure the terminal to receive application data and control data; wherein:
said application data is provided for a plurality of applications, and defines an identifier, a version, and a required authorization state for each of the applications; and
said control data defines respective authorization states for the terminal; and
receiving said application data and said control data from the headend at the terminal via the communication channel for use in downloading and accessing the version(s) of the application(s) for which the required authorization state thereof corresponds to the terminal's authorization state.

24. An apparatus for managing multiple applications in a digital network having a headend (115) that broadcasts programming services to a terminal population (150) via a communication channel, comprising:
means (120) for communicating configuration data from the headend to the terminals in the terminal population via the communication channel to configure the terminals to receive application data and control data; wherein:
said application data is provided for a plurality of applications, and defines an identifier, a version, and a required authorization state for each of the applications; and
said control data defines respective authorization states for the terminals; and
means (110) for communicating said application data and said control data from the headend to the terminals via the communication channel to enable the terminals to download and access the versions of the applications for which the required authorization state thereof corresponds to the terminal's authorization state.

25. A terminal for managing multiple applications, said terminal (150) being provided in a digital network having a headend that broadcasts programming services to a terminal population, including said terminal, via a communication channel, comprising:
means (240) for receiving configuration data from the headend via the communication channel to configure the terminal to receive application data and control data; wherein:
said application data is provided for a plurality of applications, and defines an identifier, a version, and a required authorization state for each of the applications; and
said control data defines respective authorization states for the terminal; and
means (230) for receiving said application data and said control data from the headend at the terminal via the communication channel for use in downloading and accessing the version(s) of the application(s) for which the required authorization state thereof corresponds to the terminal's authorization state.

## Patentansprüche

1. Ein Verfahren zur Verwaltung mehrerer Anwendungen in einem Digitalnetz mit einer Kopfstelle, die über einen Übertragungskanal Programmierdienste an eine Terminalgesamtheit sendet, bestehend aus folgenden Schritten:
Übertragen von Konfigurationsdaten von der Kopfstelle an Terminals in der Terminalgesamtheit über den Übertragungskanal, um die Terminals zum Empfangen von Anwendungsdaten und Steuerdaten zu konfigurieren; wobei:
die Anwendungsdaten für eine Vielzahl von Anwendungen bereitgestellt sind und einen Kennzeichner, eine Version und einen erforderlichen Autorisierungszustand für jede der Anwendungen definieren; und
die Steuerdaten jeweilige Autorisierungszustände für die Terminals definieren; und
Übertragen der Anwendungsdaten und der Steuerdaten von der Kopfstelle an die Terminals über den Übertragungskanal, um zu ermöglichen, dass die Terminals die Versionen der Anwendungen, deren erforderlicher Autorisierungszustand dem Autorisierungszustand des Terminals entspricht, herunterladen und auf diese zugreifen können.

2. Verfahren gemäß Anspruch 1, wobei:
der erforderliche Autorisierungszustand für jedes Terminal einer von einer Vielzahl von der Kopfstelle angebotenen, verfügbaren Dienstniveauebenen entspricht.

3. Verfahren gemäß Anspruch 2, wobei:
die verfügbaren Dienstniveauebenen von der Kopfstelle angeboten werden, nachdem die Benutzer der Terminals entsprechende Gebühren bezahlt haben.

4. Verfahren gemäß einem der Ansprüche 1 bis 3, wobei:
die Steuerdaten von der Kopfstelle an die Terminals übertragen werden, indem einzelne Terminals adressiert werden.

5. Verfahren gemäß einem der Ansprüche 1 bis 3, wobei:
die Steuerdaten von der Kopfstelle an die Terminals übertragen werden, indem eine Gruppe der Terminals adressiert wird.

6. Verfahren gemäß einem der Ansprüche 1 bis 5, wobei:
die Steuerdaten eine globale autorisierte Ebene definieren, um mindestens einem der Terminals Zugriff auf alle Anwendungen zu ermöglichen.

7. Verfahren gemäß einem der Ansprüche 1 bis 6, bestehend aus folgendem weiteren Schritt:
Bereitstellen eines Verrechnungssystems zur Verrechnung bestimmter Terminals je nach ihrem Autorisierungszustand.

8. Verfahren gemäß einem der Ansprüche 1 bis 7, wobei die Anwendungen mindestens eines der Folgenden umfassen:
elektronischer Programmführer, Internetbrowser, Videoabruf, Audioabruf, Postdienst, Fernsprechdienst, Aktienkurse, Wetterdaten, Reiseinformationen, Spiele, Glücksspiel, Bankwesen, Einkaufen und Wählen.

9. Verfahren gemäß einem der Ansprüche 1 bis 8, wobei
die Anwendungsdaten über den Übertragungskanal in Transportpaketen in einem separaten Band von einem Band, in dem die Programmierdienste gesendet werden, übertragen werden.

10. Verfahren gemäß einem der Ansprüche 1 bis 9, bestehend aus folgendem weiteren Schritt:
Erzeugen eines Bildschirmmenüs an den Terminals unter Verwendung der Anwendungsdaten davon, je nach den Versionen der Anwendungen, für welche die Terminals Zugriffs-Autorisierung haben.

11. Verfahren gemäß einem der Ansprüche 1 bis 10, wobei:
die höchste der Versionen von dem einen der Terminals heruntergeladen und von diesem auf sie zugegriffen wird, wenn mindestens zwei Versionen einer der Anwendungen Autorisierungszustände erforderten, welche den Autorisierungszuständen eines der Terminals entsprechen.

12. Verfahren gemäß einem der Ansprüche 1 bis 11, wobei:
die Konfigurationsdaten eine Standardanwendung für die Terminals
bezeichnen.

13. Verfahren gemäß einem der Ansprüche 1 bis 12, wobei:
die Konfigurationsdaten den Terminals Informationen zum Herunterladen der Anwendungsdaten von dem Übertragungskanal bereitstellen.

14. Verfahren gemäß einem der Ansprüche 1 bis 13, wobei:
das Digitalnetz ein Breitband-Fernsehkommunikationsnetz ist.

15. Verfahren gemäß einem der Ansprüche 1 bis 14, bestehend aus folgendem weiteren Schritt:
Festsetzen eines bestimmten Programmierdienstes, der von den Terminals abgestimmt werden soll, wenn dort eine entsprechende Anwendung ausgelöst wird.

16. Verfahren gemäß einem der Ansprüche 1 bis 15, bestehend aus folgendem weiteren Schritt:
Speichern der Steuer- und Konfigurationsdaten an den Terminals zur späteren Verwendung beim Herunterladen der und Zugreifen auf die Versionen der Anwendungen, deren erforderlicher Autorisierungszustand dem Autorisierungszustand des Terminals entspricht.

17. Verfahren gemäß einem der Ansprüche 1 bis 16, wobei:
die Anwendungsdaten Revisionsdaten umfassen, wodurch den Terminals ermöglicht wird, zu bestimmen, wann revidierte Anwendungsdaten dorthin übertragen werden; und
die Terminals auf die Revisionsdaten ansprechen, um zu bestimmen, ob sich die Versionen der Anwendungen, für welche die Terminals Zugriffs-Autorisierung haben, geändert haben.

18. Verfahren gemäß einem der Ansprüche 1 bis 17, wobei:
die Terminals dort gespeicherte Daten, welche einer ersetzten Version der autorisierten Anwendung entsprechen, löschen, und
dort Daten, die einer neuen Version der autorisierten Anwendung entsprechen, speichem, wenn sich die Versionen der Anwendungen, für welche die Terminals Zugriffs-Autorisierung haben, geändert haben.

19. Verfahren gemäß einem der Ansprüche 1 bis 18, wobei:
die Steuerdaten bewirken, dass die Terminals die Versionen der Anwendungen, für welche die Terminals Zugriffs-Autorisierung haben, herunterladen, während sie die Versionen der Anwendungen, für welche die Terminals keine Zugriffs-Autorisierung haben, zurückweisen.

20. Verfahren gemäß einem der Ansprüche 1 bis 19, wobei:
die Konfigurationsdaten bewirken, dass die Terminals dort eine Speicherkapazität zuweisen, um die Versionen der Anwendungen, für welche die Terminals Zugriffs-Autorisierung haben, zu speichern.

21. Verfahren gemäß einem der Ansprüche 1 bis 20, wobei:
der Kennzeichner, die Version und der erforderliche Autorisierungszustand für jede der Anwendungen den Terminals in einer allgemeinen virtuellen Anwendungstabelle bereitgestellt sind; und
jedes Terminal seine eigene lokale virtuelle Anwendungstabelle aus der allgemeinen virtuellen Anwendungstabelle in Übereinstimmung mit dem jeweiligen Autorisierungszustand bildet, um die Version/en der Anwendungen, deren erforderlicher Autorisierungszustand dem Autorisierungszustand des Terminals entspricht, zu definieren.

22. Verfahren gemäß einem der Ansprüche 1 bis 21, wobei:
mindestens eine bereits dort gespeicherte, jedoch nicht länger autorisierte Anwendung gelöscht wird, wenn der Autorisierungszustand eines der Terminals abgerüstet wird.

23. Ein Verfahren zur Verwaltung mehrerer Anwendungen in einem Terminal eines Digitalnetzes, wobei das Digitalnetz eine Kopfstelle aufweist, die über einen Übertragungskanal Programmierdienste an eine Terminalgesamtheit sendet, einschließlich dieses Terminals, bestehend aus folgenden Schritten:
Empfangen von Konfigurationsdaten von der Kopfstelle an dem Terminal in der Terminalgesamtheit über den Übertragungskanal, um das Terminal zum Empfangen von Anwendungsdaten und Steuerdaten zu konfigurieren; wobei:
die Anwendungsdaten für eine Vielzahl von Anwendungen bereitgestellt sind und einen Kennzeichner, eine Version und einen erforderlichen Autorisierungszustand für jede der Anwendungen definiert; und
die Steuerdaten jeweilige Autorisierungszustände für das Terminal definieren; und
Empfangen der Anwendungsdaten und der Steuerdaten von der Kopfstelle an dem Terminal über den Übertragungskanal zur Verwendung beim Herunterladen der und Zugreifen auf die Version/en der Anwendung/en, deren erforderlicher Autorisierungszustand dem Autorisierungszustand des Terminals entspricht.

24. Eine Vorrichtung zur Verwaltung mehrerer Anwendungen in einem Digitalnetz mit einer Kopfstelle (115), die über einen Übertragungskanal Programmierdienste an eine Terminalgesamtheit (150) sendet, bestehend aus:
einem Mittel (120) zur Übertragung von Konfigurationsdaten von der Kopfstelle an die Terminals in der Terminalgesamtheit über den Übertragungskanal, um die Terminals zum Empfangen von Anwendungsdaten und Steuerdaten zu konfigurieren; wobei:
die Anwendungsdaten für eine Vielzahl von Anwendungen bereitgestellt sind und einen Kennzeichner, eine Version und einen erforderlichen Autorisierungszustand für jede der Anwendungen definieren; und
die Steuerdaten jeweilige Autorisierungszustände für die Terminals definieren; und
einem Mittel (110) zur Übertragung der Anwendungsdaten und der Steuerdaten von der Kopfstelle an die Terminals über den Übertragungskanal, um zu ermöglichen, dass die Terminals die Versionen der Anwendungen, deren erforderlicher Autorisierungszustand dem Autorisierungszustand des Terminals entspricht, herunterladen und auf diese zugreifen können.

25. Ein Terminal zur Verwaltung mehrerer Anwendungen, wobei das Terminal (150) in einem Digitainetz bereitgestellt ist, das eine Kopfstelle aufweist, die über einen Übertragungskanal Programmierdienste an eine Terminalgesamtheit, einschließlich dieses Terminals, sendet, bestehend aus:
einem Mittel (240) zum Empfangen von Konfigurationsdaten von der Kopfstelle über den Übertragungskanal, um das Terminal zum Empfangen von Anwendungsdaten und Steuerdaten zu konfigurieren; wobei:
die Anwendungsdaten für eine Vielzahl von Anwendungen bereitgestellt sind und einen Kennzeichner, eine Version und einen erforderlichen Autorisierungszustand für jede der Anwendungen definieren; und
die Steuerdaten jeweilige Autorisierungszustände für das Terminal definieren; und
einem Mittel (230) zum Empfangen der Anwendungsdaten und der Steuerdaten von der Kopfstelle an dem Terminal über den Übertragungskanal zur Verwendung beim Herunterladen der und Zugreifen auf die Version/en der Anwendung/en, deren erforderlicher Autorisierungszustand dem Autorisierungszustand des Terminals entspricht.

## Revendications

1. Un procédé pour gérer des applications multiples dans un réseau numérique ayant une tête de réseau qui diffuse des services de programmation à une collectivité de terminaux par le biais d'un canal de communication, comprenant les étapes consistant :
à communiquer des données de configuration de la tête de réseau à des terminaux dans la collectivité de terminaux par le biais du canal de communication pour configurer les terminaux de façon à recevoir des données d'application et des données de contrôle ; dans lequel :
lesdites données d'application sont fournies pour une pluralité d'applications, et définissent un identifiant, une version et un état d'autorisation requis pour chacune des applications ; et
lesdites données de contrôle définissent des états d'autorisation respectifs pour les terminaux ; et
à communiquer lesdites données d'application et lesdites données de contrôle de la tête de réseau aux terminaux par le biais du canal de communication pour permettre aux terminaux de télécharger et d'accéder aux versions des applications pour lesquelles l'état d'autorisation requis de celles-ci correspond à l'état d'autorisation du terminal.

2. Le procédé de la revendication 1, dans lequel :
l'état d'autorisation requis pour chaque terminal correspond à un étage parmi une pluralité d'étages de niveau de service disponibles
offerts par la tête de réseau.

3. Le procédé de la revendication 2, dans lequel :
les étages de niveau de service disponibles sont offerts par la tête de réseau après versement des redevances correspondantes par les utilisateurs des terminaux.

4. Le procédé de l'une des revendications 1 à 3, dans lequel :
les données de contrôle sont communiquées de la tête de réseau aux terminaux en adressant des terminaux individuels parmi les terminaux.

5. Le procédé de l'une des revendications 1 à 3, dans lequel :
les données de contrôle sont communiquées de la tête de réseau aux terminaux en adressant un groupe des terminaux.

6. Le procédé de l'une des revendications 1 à 5, dans lequel :
lesdites données de contrôle définissent un étage autorisé global pour permettre à au moins l'un des terminaux d'accéder à la totalité des applications.

7. Le procédé de l'une des revendications 1 à 6, comprenant l'étape supplémentaire consistant :
à fournir un système de facturation pour facturer des terminaux spécifiques parmi les terminaux selon leur état d'autorisation.

8. Le procédé de l'une des revendications 1 à 7, dans lequel les applications comportent au moins une application parmi :
guide de programme électronique, navigateur Internet, vidéo à la demande, audio à la demande, service de courrier, service de téléphonie, bourse, météo, information voyages, jeux, jeux d'argent, finance, shopping et vote.

9. Le procédé de l'une des revendications 1 à 8, dans lequel
les données d'application sont communiquées par le biais du canal de communication dans des paquets de transport dans une bande distincte d'une bande dans laquelle les services de programmation sont diffusés.

10. Le procédé de l'une des revendications 1 à 9, comprenant l'étape supplémentaire consistant :
à générer un menu à l'écran au niveau des terminaux en utilisant les données d'application de ceux-ci selon les versions des applications auxquelles les terminaux sont autorisés à accéder.

11. Le procédé de l'une des revendications 1 à 10, dans lequel :
lorsqu'au moins deux versions de l'une des applications ont des états d'autorisation requis qui correspondent aux états d'autorisation de l'un des terminaux, ce terminal parmi les terminaux télécharge la plus élevée des versions et y accède.

12. Le procédé de l'une des revendications 1 à 11, dans lequel :
les données de configuration identifient une application par défaut pour les terminaux.

13. Le procédé de l'une des revendications 1 à 12, dans lequel :
les données de configuration fournissent des informations aux terminaux pour télécharger les données d'application du canal de communication.

14. Le procédé de l'une des revendications 1 à 13, dans lequel :
le réseau numérique est un réseau de communication de télévision à large bande.

15. Le procédé de l'une des revendications 1 à 14, comprenant l'étape supplémentaire consistant :
à spécifier un service de programmation particulier qui doit être syntonisé par les terminaux lorsqu'une application correspondante est lancée au niveau de ceux-ci.

16. Le procédé de l'une des revendications 1 à 15, comprenant l'étape supplémentaire consistant :
à stocker les données de contrôle et de configuration au niveau des terminaux en vue de leur utilisation ultérieure lors du téléchargement et de l'accès aux versions des applications pour lesquelles l'état d'autorisation requis de celles-ci correspond à l'état d'autorisation du terminal.

17. Le procédé de l'une des revendications 1 à 16, dans lequel :
les données d'application comportent des données de révision qui permettent aux terminaux de déterminer le moment où des données d'application révisées leur sont communiquées ; et
les terminaux sont sensibles aux données de révision pour déterminer si les versions des applications auxquelles les terminaux sont autorisés à accéder ont changé.

18. Le procédé de l'une des revendications 1 à 17, dans lequel :
lorsque les versions des applications auxquelles les terminaux sont autorisés à accéder ont changé, les terminaux effacent au niveau de ceux-ci les données stockées correspondant à une version remplacée de l'application autorisée, et stockent au niveau de ceux-ci les données correspondant à une nouvelle version de l'application autorisée.

19. Le procédé de l'une des revendications 1 à 18, dans lequel :
les données de contrôle amènent les terminaux à télécharger les versions des applications auxquelles les terminaux sont autorisés à accéder, tout en rejetant les versions des applications auxquelles les terminaux ne sont pas autorisés à accéder.

20. Le procédé de l'une des revendications 1 à 19, dans lequel :
les données de configuration entraînent les terminaux à allouer une quantité de mémoire au niveau de ceux-ci pour stocker les versions des applications auxquelles les terminaux sont autorisés à accéder.

21. Le procédé de l'une des revendications 1 à 20, dans lequel :
ledit identifiant, ladite version et ledit état d'autorisation requis pour chacune des applications sont fournis aux terminaux dans un tableau d'application virtuel commun ; et
chaque terminal construit son propre tableau d'application virtuel local à partir du tableau d'application virtuel commun conformément à l'état d'autorisation respectif pour définir la (les) version(s) de l'(des) application(s) pour laquelle (lesquelles) l'état d'autorisation requis correspond à l'état d'autorisation du terminal.

22. Le procédé de l'une des revendications 1 à 21, dans lequel :
si l'état d'autorisation de l'un des terminaux est mis à un niveau inférieur, au moins une application déjà stockée au niveau de celui-ci mais qui n'est plus autorisée est effacée.

23. Un procédé pour gérer des applications multiples dans un terminal d'un réseau numérique, ledit réseau numérique ayant une tête de réseau qui diffuse des services de programmation à une collectivité de terminaux, comportant ledit terminal, par le biais d'un canal de communication, comprenant les étapes consistant :
à recevoir des données de configuration de la tête de réseau au niveau du terminal dans la collectivité de terminaux par le biais du canal de communication pour configurer le terminal de façon à recevoir des données d'application et des données de contrôle ; dans lequel :
lesdites données d'application sont fournies pour une pluralité d'applications, et définissent un identifiant, une version et un état d'autorisation requis pour chacune des applications ; et
lesdites données de contrôle définissent des états d'autorisation respectifs pour le terminal ; et
à recevoir lesdites données d'application et lesdites données de contrôle de la tête de réseau au niveau du terminal par le biais du canal de communication en vue de leur utilisation lors du téléchargement et de l'accès à la (aux) version(s) de l'(des) application(s) pour laquelle (lesquelles) l'état d'autorisation requis de celle(s)-ci correspond à l'état d'autorisation du terminal.

24. Un appareil pour gérer des applications multiples dans un réseau numérique ayant une tête de réseau (115) qui diffuse des services de programmation à une collectivité de terminaux (150) par le biais d'un canal de communication, comprenant :
un moyen (120) pour communiquer des données de configuration de la tête de réseau aux terminaux dans la collectivité de terminaux par le biais du canal de communication pour configurer les terminaux de façon à recevoir des données d'application et des données de contrôle ; dans lequel :
lesdites données d'application sont fournies pour une pluralité d'applications, et définissent un identifiant, une version et un état d'autorisation requis pour chacune des applications ; et
lesdites données de contrôle définissent des états d'autorisation respectifs pour les terminaux ; et
un moyen (110) pour communiquer lesdites données d'application et lesdites données de contrôle de la tête de réseau aux terminaux par le biais du canal de communication pour permettre aux terminaux de télécharger et d'accéder aux versions des applications pour lesquelles l'état d'autorisation requis de celles-ci correspond à l'état d'autorisation du terminal.

25. Un terminal pour gérer des applications multiples, ledit terminal (150) étant fourni dans un réseau numérique ayant une tête de réseau qui diffuse des services de programmation à une collectivité de terminaux, comportant ledit terminal, par le biais d'un canal de communication, comprenant :
un moyen (240) pour recevoir des données de configuration de la tête de réseau par le biais du canal de communication pour configurer le terminal de façon à recevoir des données d'application et des données de contrôle ; dans lequel :
lesdites données d'application sont fournies pour une pluralité d'applications, et définissent un identifiant, une version et un état d'autorisation requis pour chacune des applications ; et
lesdites données de contrôle définissent des états d'autorisation respectifs pour le terminal ; et
un moyen (230) pour recevoir lesdites données d'application et lesdites données de contrôle de la tête de réseau au niveau du terminal par le biais du canal de communication en vue de leur utilisation lors du téléchargement et de l'accès à la (aux) version(s) de l'(des) application(s) pour laquelle (lesquelles) l'état d'autorisation requis de celle(s)-ci correspond à l'état d'autorisation du terminal.
